# EUROPEAN PATENT APPLICATION

(11) **EP 3 202 520 A1**
(43) Date of publication of application: **09.08.2017**
(21) Application number: 16205578.4
(22) Date of filing: 20.12.2016
(51) Int. Cl.: B23K 1/19, B23K 1/005, B23K 1/008, B23K 1/20, B23K 1/00, B23K 1/08, B23K 35/00, C25D 5/02, C25D 5/18, B23K 35/28, B23K 35/02, B23K 101/00, B23K 103/14

(54) **BRAZING TITANIUM ALUMINUM ALLOY COMPONENTS**

(30) Priority: 08.01.2016 US 201662276660 P; 06.12.2016 US 201615370635
(71) Applicant: Rolls-Royce Corporation, Indianapolis, Indiana 46225-1103 (US)
(72) Inventor: SHUCK, Quinlan Lee, Indianapolis, Indiana 46220 (US); BADER, Jacque Sue, Martinsville, Indiana 46151 (US)
(74) Representative: HGF Limited

(57) **Abstract**

The disclosure describes a technique that includes covering a joint surface of a first part (14)including a titanium aluminum (TiAl) alloy with a braze material (30 including aluminum, where covering the joint surface includes at least one of electroplating the braze material on the joint surface, hot dipping the braze material on the joint surface, or positioning a foil of the braze material adjacent to the joint surface, positioning a second part (16) including a titanium alloy in contact with the first part to define a joint region, where the joint region includes the braze material interposed between the second part and the joint surface of the first part, and heating the joint region to at least partially melt the braze material to form a braze joint connecting the first part to the second part.

## Description

This application claims the benefit of U.S. Provisional Application number 62/276,660 filed January 8, 2016, which is incorporated herein by reference in its entirety.

### TECHNICAL FIELD

The present disclosure generally relates to brazes for joining a titanium aluminum alloy component.

### BACKGROUND

Many titanium-aluminum (TiAl) alloys, form strong, lightweight components with capabilities for use in high temperature applications such as in an exhaust duct of a gas turbine engine. Some articles used in the exhaust duct of a gas turbine engine are more easily formed out of multiple parts that are subsequently joined together. For example, the geometry of the article may be complex, may be difficult to form in a single unitary structure, or both. However, joining multiple parts formed of TiAl alloys has been difficult, as the melting point of TiAl alloys may be very high and the junctions formed from joining two or more components of TiAl alloys together may be brittle and structurally weak.

### SUMMARY

In some examples, the disclosure describes a technique that includes covering a joint surface of a first part including a titanium aluminum (TiAl) alloy with a braze material comprising aluminum, where covering the joint surface includes at least one of electroplating the braze material on the joint surface, hot dipping the braze material on the joint surface, or positioning a foil of the braze material adjacent to the joint surface, positioning a second part including a titanium alloy in contact with the first part to define a joint region, where the joint region includes the braze material interposed between the second part and the joint surface of the first part, and heating the joint region to at least partially melt the braze material to form a braze joint connecting the first part to the second part.

In some examples, the disclosure describes a technique that includes electroplating a braze material including aluminum on a joint surface of a first part including a titanium aluminum (TiAl) alloy, positioning a second part in contact with the first part to define a joint region, where the joint region includes the braze material interposed between the second part and the joint surface of the first part, and heating the joint region to at least partially melt the braze material and to form a braze joint that joins the first part to the second part.

In some examples, the disclosure describes an assembly that includes a first part including a TiAl alloy and a layer of a braze material on a joint surface of the first part, where the braze material includes at least about 99% by weight aluminum, a second part including a TiAl alloy, where the first part and second part contact one another to define a joint region, where the joint region includes the layer of the braze material interposed between the second part and the joint surface of the first part, and a heat source configured to heat at least the braze material in the joint region to at least partially melt the layer of braze material.

The details of one or more examples are set forth in the accompanying drawings and the description below. Other features, objects, and advantages will be apparent from the description and drawings, and from the claims.

### BRIEF DESCRIPTION OF THE DRAWINGS

FIG. 1 is a conceptual and schematic diagram illustrating an example assembly for joining a first part including a TiAl alloy and a second part using a braze material that includes aluminum.
FIG. 2 is a conceptual and schematic diagram illustrating an example assembly for joining a first part and a second part using a braze material coated with a titanium-based powder.
FIG. 3 is a flow diagram illustrating an example technique for joining a first part including a TiAl alloy and second part using a braze material.

### DETAILED DESCRIPTION

In some examples, the disclosure describes assemblies, systems, and techniques for joining a first part including a titanium-aluminum (TiAl) alloy to a second part using braze material including elemental aluminum or an aluminum alloy. The techniques described herein may include electroplating or hot dipping a joint surface of a first part comprising a TiAl alloy with a layer of braze material including at least about 99% by weight aluminum and positioning the first part adjacent to a second part to define a joint region at the interface of the first part and the second part. In some examples, the joint region may be heated using a heat source such as, for example, a vacuum furnace, a laser, a plasma arc source, or a convection or conduction heat source to heat the joint region to an elevated temperature to cause the layer of braze material to melt and join the first part to the second part. During the brazing process, the first and second parts may be pressed together and cooled to join the first and second parts at the joint region.

In some examples, the techniques described herein may be used to form a braze joint between the first and second parts that exhibits substantially similar thermophysical and mechanical properties as the underlying base materials (e.g., TiAl alloy) of the first and second parts. In addition, in some examples, the braze joints formed using the techniques described herein may able to withstand substantially similar environments as the underlying base materials of first and second parts, such as substantially similar corrosive, oxidizing, and/or high temperature environments.

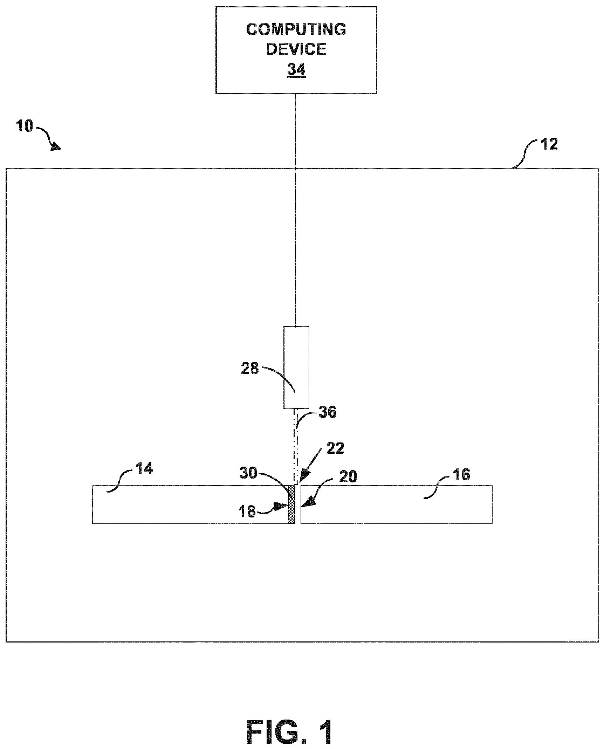

FIG. 1 is a conceptual and schematic diagram illustrating an example assembly 10 for joining a first part 14 including a TiAl alloy to a second part 16 including a TiAl alloy using a braze material 30 that includes aluminum (e.g., elemental aluminum or an aluminum alloy). Assembly 10 may include an enclosure 12, which encloses first part 14 and second part 16 and at least one heat source 28. Assembly 10 also may include computing device 34, which is operatively coupled to at least one heat source 28. First part 14, second part 16, and at least one heat source 28 are also positioned within enclosure 12.

In some examples, enclosure 12 may enclose an atmosphere that may reduce thermal or chemical degradation of at least one of first part 14, second part 16, or braze material 30 during processing. For example, enclosure 12 may enclose an atmosphere including an gas that is substantially inert to the at least one of first part 14, second part 16, or braze material 30 at the conditions experienced by the at least one of first part 14, second part 16, or braze material 30 during processing. As another example, enclosure 12 may enclose a vacuum that reduces the presence of gases that may react with braze material 30 or the base material of first part 14 or second part 16, or both.

First part 14 and second part 16 may be parts that form a component of a high temperature mechanical system. For example, first part 14 and second part 16 may together be a blade track, an airfoil, a blade, a combustion chamber liner, an exhaust duct or the like, of a gas turbine engine. In some examples, one or both of first part 14 and second part 16 may be a part for use in high temperature applications (e.g., used in temperature environments of greater than about 650°C), or the like. The techniques described herein may facilitate joining of first part 14 and second part 16 having complex geometries, large size, or both that may otherwise be unsuited to being constructed as a single, unitary structure.

In some examples, one or more of first part 14 and second part 16 may include a base material including a TiAl alloy. TiAl alloys have been found to exhibit several desirable performance characteristics for use in aerospace application. For example, TiAl alloys are lightweight, e.g., compared to stainless steel, titanium, or superalloy components. Additionally, in some examples, TiAl alloys are able to withstand high temperatures and corrosive environments (e.g., such as in the exhaust of a gas turbine engine which may reach temperature in excess of 650°C). Many aerospace applications, such as the components used in a turbine engine, may benefit from the reduced weight and high temperature characteristics of structures formed from TiAl alloys. Any TiAl alloy may be used for the base material of first part 14 and secondpart 16. In some examples, the TiAl alloy may include between about 40 atomic percent (at.%) to about 60 at.% Ti and about 39 at.% to about 60 at.% Al. In some examples, the TiAl alloy may include between about 50 at.% to about 58 at.% Ti and between about 42 at.% to about 50 at.% Al, between about 46 at.% to about 56 at.% Ti and about 39 at.% to about 49 at.% Al. In some examples, the TiAl alloy may include dopant elements, including, for example, at least one of niobium, molybdenum, chrome, boron, tantalum, carbon, or the like. In some examples, the dopant elements may be present in the TiAl alloy in an amount between about 2 at.% and about 12 at.%. An example TiAl alloy may include a composition including about 51.4 at.% Ti, about 43.5 at.% Al, about 4 at.% niobium, about 1 at.% molybdenum, and about 0.1 at.% boron. In some examples, first part 14 and second part 16 may consist essentially of a TiAl alloy.

In some examples, one or both of first part 14 and second part 16 may be formed using for example, sheet fabrication. Although FIG. 1 illustrates first part 14 and second part 16 as each defining a simple, substantially rectangular geometry, in other examples, first part 14, second part 16, or both may define a more complex geometry, including simple or complex curves, surfaces, overhangs, undercuts, or the like.

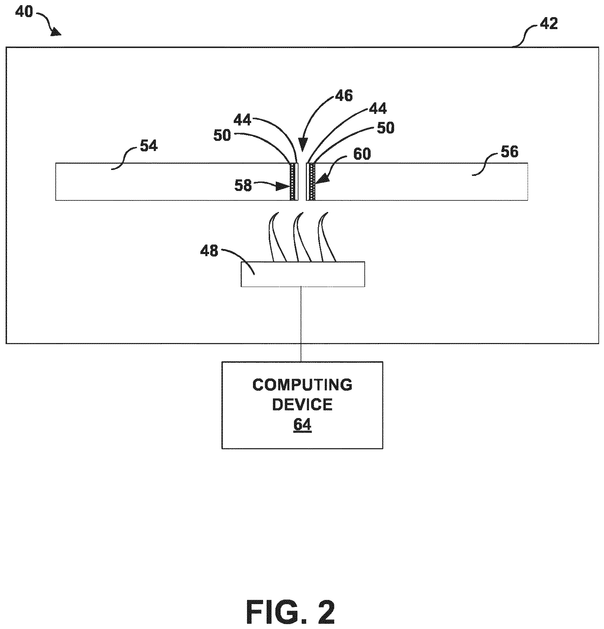

First part 14 defines at least one joint surface 18 and second part 16 defines at least one joint surface 20. At least one of joint surfaces 18 or 20 may be covered with braze material 30. For example, braze material 30 may be coated on at least one of joint surfaces 18 or 20 of first part 14 or second part 16 respectively. Collectively joint surfaces 18 and 20 and braze material 30 form joint region 22. As shown in FIG. 1, in some examples, braze material 30 may be applied to only joint surface 18 of first part 14. In other examples, braze material 30 may be applied to both joint surfaces 18 and 20 of first part 14 and second part 16 (e.g., as described with respect to FIG. 2). In some examples, braze material 30 may be added to portions of one or more joint surfaces 18 and 20 such that during the brazing process of joint rejoin 22, at least some braze material 30 is interposed between the joint surfaces 18 and 20 of first part 18 and second part 16.

While FIG. 1 illustrates joint surfaces 18 and 20 as substantially flat surfaces, in some examples, joint surfaces 18 and 20 may define other, more complex shapes, including, for example, simple or complex curves, overhangs, undercuts, or the like. First part 14 and second part 16 are positioned such that joint surfaces 18 and 20 are adjacent to each other with braze material 30 interposed between the joint surfaces to define joint region 22 (e.g., a region where first and second parts 14 and 16 are joined via braze material 30). In some examples, joint surfaces 18 and 20 may define substantially complementary geometric shapes that join to define joint region 22. Joint region 22 may include any kind of joint, such as a lap joint, bridle joint, a butt joint, a miter joint, a dado joint, a groove joint, a tongue and groove joint, a mortise and tenon joint, a birdsmouth joint, a halved joint, a biscuit joint, a lap joint, a double lap joint, a dovetail joint, a splice joint, or the like.

Brazing of joint region 22 may be characterized as coating at least one of joint surfaces 18 or 20 of first part 14 or second part 16 with braze material 30, placing the parts in contact with each other at joint region 22, and heating the joint region 22 to a sufficient temperature to cause braze material 30 to melt and contact both parts 14 and 16. Upon melting, a portion of braze material 30 may then partially intersperse (e.g., infuse) with first part 14 and second part 16. The assembly may be held at elevated temperature for a period of time to allow the chemical elements of the braze to diffuse and mix until the joint is of substantially similar chemistry to one or both of the parts. The parts may then be cooled to solidify the braze joint (e.g., the joint created at joint region 22), thereby bonding first part 14 to second part 16.

In some examples, the strength and quality of the braze joint may depend on various factors in the brazing process including, for example, the composition of the braze material 30, the uniformity of the braze material 30 prior to brazing, the final material composition of the braze joint, the heating and cooling parameters used to form the braze joint, the composition of the base materials of first part 14 and second part 16, or the like. For example, one potential difficulty in brazing first part 14 and second part 16 that include TiAl alloy base materials is producing a braze joint that exhibits sufficient strength characteristics. For example, many TiAl alloys exhibit high reactivity with traditional braze materials, and some reactions may generate one or more phases that are brittle or weak, and which may be unsuitable for aerospace or other industrial applications. Additionally, some braze materials (e.g., brazing alloys) tend to be highly reactive in high temperature environments to form one or more brittle or weak phase, making such braze materials ill-suited for certain applications, such as for components of a gas turbine engine. Depending on how the braze joint between first part 14 and second part 16 is formed, the resultant braze joint may include undesirable materials or regions of undesirable materials (e.g., inferior alloys or reaction products), causing the braze joint between first part 14 and second part 16 to be weak, brittle, or otherwise unsatisfactory comparted to the base materials of first part 14 and second part 16. The techniques describe below may facilitate formation of a braze joint between first part 14 and second part 16 that exhibits similar structural characteristics to those of the underlying base materials of first part 14 and second part 16.

For example, a braze joint may be formed using a braze material 30 that includes elemental aluminum or an aluminum-based alloy. In some examples, braze material 30 may consist essentially of elemental aluminum or consist of elemental aluminum. For example, many TiAl alloys have been found to exhibit a high reactivity with many traditional braze materials, which reactions may result in brittle or weak phases. Such reactions may be reduced or substantially avoided using braze material 30 that includes or consists essentially of elemental aluminum, which is already present in the TiAl alloy base materials. Additionally, braze materials 30 that include or consist essentially of elemental aluminum may exhibit a relatively low melting point compared the melting point of the TiAl alloy base materials or compared the melting point of traditional braze materials or alloy-based braze materials. The relatively low melting point of braze material 30 allows the braze material 30 including or consisting essentially of elemental aluminum to melt at relatively low temperatures (e.g., less than about 670°C) without melting the TiAl alloy base materials of first and second parts 14 and 16. Additionally or alternatively, by brazing at relatively low temperatures, the thermal exposure of first part 14 and second part 16 may be reduced thereby reducing the likelihood of side reactions to occur in the TiAl alloy base materials, which may otherwise form brittle or weak phases, modify the microstructure (e.g., phase domain size, type, distribution, or the like) of first part 14 or second part 16, damage first part 14 and second part 16, or the like.

Additionally, using a braze material 30 that includes elemental aluminum in conjunction with parts 14 and 16 that include TiAl alloy base materials may allow for the resulting braze joint to exhibit a composition that is similar to or substantially the same (e.g., the same or nearly the same) as the composition of the TiAl alloy base materials of parts 14 and 16. For example, as the aluminum braze material infuses into first part 14 and second part 16 during the brazing process, the aluminum may partially dissolve some of the titanium in the TiAl base materials allowing the titanium to cross-infuse into the braze joint. Once solidified, the braze joint may exhibit a composition that may be substantially the same (e.g., the same or nearly the same) as the composition of the underlying base material of first part 14 and second part 16. As a result, the braze joint may exhibit similar characteristics (e.g., strength, ductility, heat resistance, or the like) as first part 14 and second part 16.

While the below examples are described with respect to coating braze material 30 on joint surface 18 of first part 14, the same or similar processes may be used to coat braze material 30 on other portions of first part 14 or on other parts (e.g., second part 16).

In some examples, braze material 30 may be coated on one or more of the joint surfaces (e.g., joint surface 18) through a coating processing, including, for example, a hot dip (e.g., dipping first part 14 in molten elemental aluminum) or an electroplating process. Electroplating braze material 30 (e.g., elemental aluminum) on at least one of joint surface 18 may be performed using suitable technique. The electroplating of braze material 30 may allow for the controlled deposition of braze material 30 on joint surface 18 compared to other application techniques, such as spraying or slurry deposition. For example, electroplating of braze material 30 may facilitate finer control of the thickness of braze material 30 deposited on joint surface 18, and may result in a substantially uniform thickness (e.g., uniform or nearly uniform thickness) of braze material 30 across joint surface 18. The uniformity of braze material 30 may allow for a more consistent or uniform braze joint between first part 14 and second part 16, for example, by evenly distributing braze material 30 throughout joint region 22 to allow for a more uniform diffusion of materials during the brazing process. Additionally or alternatively, coating joint surface 18 of first part 14 with a relatively thin layer of braze material 30 (e.g., less than about 100 microns) may reduce the amount of material that diffuses into first part 14 and second part 16 during the brazing process, which may facilitate forming of a braze joint including a composition substantially the same (e.g., the same or nearly the same) as the composition of the underlying base materials of first part 14 and second part 16.

In some examples, electroplating braze material 30 on joint surface 18 of first part 14 may also help avoid unwanted side reactions of braze material 30 compared to alternative techniques. For example, electroplating braze material 30 on joint surface 18 may form a solid layer of braze material (e.g., elemental aluminum) as opposed to applying braze material 30 by spraying or slurry deposition may include elemental aluminum in particle form that may oxidize to aluminum oxide during the application, and which may result in an inferior braze joint being formed.

In some examples, joint surface 18 of first part 14 may be cleaned, pre-treated, or both prior to coating joint surface 18 with braze material 30. The cleaning/pre-treatment may remove contaminates such as scale, grease, oxides (e.g., oxides or titanium or aluminum), or the like, from joint surface 18. The presence of such contaminates (e.g., oxides) may otherwise interfere with the coating process or negatively impact the integrity of the final braze joint produced using braze material 30. In some examples, the cleaning/pre-treatment may include, for example, cleaning first part 14 with one or more degreasing solutions to remove surface contaminates from joint surface 18. In some examples, first part 14 may undergo acid or plasma etching to removing any oxides from joint surface 18.

In some examples, electroplating braze material 30 on joint surface 18 maybe performed by partially submerging first part 14 (e.g., submerging at least joint surface 18) in a bath of an aluminum-based electrolyte solution. Direct or pulsed-reverse electrical current may then be applied to first part 14 to electroplate braze material 30 (e.g., elemental aluminum) on joint surface 18. Using a pulsed-reverse electrical current, e.g., periodically reversing the electroplating current, may help regulate the growth, purity, and uniformity of the formed layer of braze material 30.

Any suitable aluminum-based electrolyte solution configured to deposit braze material 30 (e.g., elemental aluminum) on joint surface 18 may be used. Example electrolyte solutions may include, for example, an aluminum alkyl or tri-propyl-aluminum (TPA) mixed with one or more, salts, solvents, and/or other enhancers or additives. In some examples, the molar ratio of aluminum alkyl or TPA to salt may be about 2:1.

Suitable aluminum alkyls that may be used in the aluminum-based electrolyte solution may include (R')Al(R)₂ where where R' may include an alkyl group including 1-8 linked carbons (e.g., linear or branched) including, for example, methyl, ethyl, n-propyl, isopropyl, n-butyl, iso-butyl, pentyl, hexyl, heptyl, octyl, or the like, and where R may include a hydrogen, a halogen, or an alkyl group including 1-8 linked carbons (e.g., linear or branched) including, for example, methyl, ethyl, n-propyl, isopropyl, n-butyl, iso-butyl, pentyl, hexyl, heptyl, octyl, or the like.

Suitable TPA's that may be used in the aluminum-based electrolyte solution may include compounds defined by XY•(nAl(C₃H₇)₃(2-n)AlR₃) where n may be 1 or 2. X may be a cation, such as, Li, Na, K, Rb, Cs, NR'₄, or combinations thereof, where R' may include an alkyl group including 1-8 linked carbons (e.g., linear or branched) including, for example, methyl, ethyl, n-propyl, isopropyl, n-butyl, iso-butyl, pentyl, hexyl, heptyl, octyl, or the like. Y may be an anion such as H, F, Cl, Br, or mixtures thereof. R may include a hydrogen, a halogen, or an alkyl group including 1-8 linked carbons (e.g., linear or branched) including, for example, methyl, ethyl, n-propyl, isopropyl, n-butyl, iso-butyl, pentyl, hexyl, heptyl, octyl, or the like.

Suitable salts that may be used in the aluminum-based electrolyte solution may include salts containing a cation including, for example, an alkali metal, such as lithium, sodium, potassium, rubidium, cesium, or the like, or tetraammonium, and the like. In some examples the salt may include an anion including, for example, a halogen anion, such as fluoride, chloride, bromide, or the like, a hydride, or the anion may be an straight or branched, substituted or unsubstituted alkyl based anion (e.g., methyl, ethyl, propyl, or butyl based anion) like.

Suitable solvents that may be used in the aluminum-based electrolyte solution may include aromatic or aliphatic hydrocarbons including, for example, benzene, toluene, xylene, meta-xylene, cumene, diphenylmethane, para-isopropyl-methylbenzene, tetralin, ethylbenzene, anisole, dipropylether, diisoproplyether, dibutylether, tetrahydrofuran, or the like.

In some examples, portions of first part 14 may be masked prior electroplating braze material 30 on joint surface 18. Masking first part 14 may allow for braze material 30 to be deposited on select portions of first part 14 (e.g., joint surface 18).

In some examples, the electroplating process may result in the substantially uniform (e.g., uniform or nearly uniform) deposition of braze material 30 on at least one of joint surface 18, which, upon heating, may in turn produce a braze joint the exhibits a substantially uniform (e.g., uniform or nearly uniform) composition throughout joint region 22. For example, during subsequent brazing of joint region 22, braze material 30 (e.g., elemental aluminum) may be heated above the melting point of braze material 30 causing the material to melt and infuse into first part 14 and second part 16 to establish the braze joint between parts 14 and 16. In some examples, as braze material 30 infuses first part 14 and second part 16, the aluminum of braze material 30 may cause some of the TiAl alloy base materials (e.g., titanium) of parts 14 and 16 to inter-infuse into the braze joint between 14 and secondpart 16. The resulting process may redefine the composition of joint region 22 (e.g., the material forming the braze joint) such that the composition becomes similar to or substantially the same (e.g., the same or nearly the same) as the composition of the underlying TiAl alloy base materials of first part 14 and second part 16. In this way, the resultant braze joint formed at joint region 22 may better exhibit the structural characteristics of first part 14 and secondpart 16 (e.g., strength, ductility, heat resistance, or the like) compared to joints formed using other braze materials or formed using other joining processes.

Additionally or alternatively, in some examples joint surfaces 18 and 20 may be covered by a thin sheet or foil (e.g., less than about 200 microns) of braze material 30 prior to brazing. For example, a foil of braze material 30 may be positioned adjacent to joint surface 18 such that the foil of braze material 30 covers joint surface 18 and is sandwiched between the respective joint surfaces 18 and 20 of first and second parts 14 and 16.

Assembly 10 also includes at least one heat source 28 configured to heat at least one of braze material 30, joint surfaces 18 or 20, or joint region 22 to initiate brazing. In some examples, heat source 28 may include, for example, a laser source, such as a CO laser, a CO₂ laser, a Nd:YAG laser; an electron beam source; a plasma source; a plasma arc torch; or the like. For example, heat source 28 may be selected to provide an energy beam 36 with a predetermined wavelength or wavelength spectrum that may be absorbed by braze material 30 or joint region 22 causing the temperature of braze material 30 to increase above the melting point of braze material 30. In some examples, heat source 28 may be configured to heat braze material 30 to an initial braze temperature between about 665°C and about 695°C, such as about 680°C to at least partially melt braze material 30 to induce brazing between first part 14 and second part 16. As braze material 30 (e.g., aluminum) begins to alloy with the base materials of first part 14 and second part 16, the solidification temperature of the resultant alloy will rise. In some examples, joint region 22 may be heated above the initial braze temperature and held at the elevated temperature to promote a more homogeneous distribution of braze material 30 and increase the temperature capability of the resultant braze joint.

In some examples, assembly 10 may include computing device 34, for example, a desktop computer, a laptop computer, a workstation, a server, a mainframe, a cloud computing system, or the like, to control one or more of operations of assembly 10. Computing device 34 may include or may be one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some examples, the functionality of computing device 34 may be provided within dedicated hardware and/or software modules.

Computing device 34 may be configured to control operation of assembly 10, including, for example, heat source 28 and/or control the internal environment of enclosure 12. In some examples, computing device 34 may be communicatively coupled to heat source 28 using a communication connection. Such connection may be wireless, wired connection, or both. For example, in examples where heat source 28 includes a laser (e.g., as shown in FIG. 1), computing device 34 may control at least one of the power level of heat source 28, the focal spot size of energy beam 36 delivered to braze material 30, the relative movement of the focal spot of energy beam 36 relative to joint region 22, a pause time between bursts of energy, the angle of energy beam 36 relative to joint region 22, or the like. In some examples, computing device 34 may be configured to control heat source 28 to heat braze material 30 to a temperature of at least about 660°C and maintain the temperature to induce brazing between first part 14 and second part 16. Computing device 34 may control the at least one of these parameters to control the amount of heat delivered to braze material 30 at a given time (e.g., the rate of temperature change of braze material 30).

In some examples, after covering one or more of joint surfaces 18 and 20 with braze material 30, the braze material 30 may be treated with a titanium-based powder prior to brazing. For example, FIG. 2 is a conceptual and schematic diagram illustrating another example assembly 40 for joining first part 54 and second part 56 using braze material 50 coated with a titanium-based powder 44. Assembly 40 includes computing device 64, enclosure 42 containing first part 54, second part 56, and heat source 48. As described above, braze material 50 may be coated (e.g., electroplated or hot dipped) on or positioned adjacent to joint surfaces 68 and 70 of first part 54 and second part 56 respectively. At least one of first part 54 or second part 56 may include a TiAl alloy base material having respective joint surfaces 68 and 70. In some examples, titanium-based powder 44 may then be deposited on at least a portion of braze material 50. Titanium-based powder 44 may increase an amount of titanium in the resulting braze joint between first part 54 and second part 56. For example, during the brazing process, braze material 50 will melt allowing titanium-based powder 44 to infuse into braze material 50 to provide an additional source of titanium for the resultant braze joint. In some such examples, titanium-based powder 44 may help control the composition of the resulting braze joint so that the resulting braze joint exhibits a composition substantially the same (e.g., the same or nearly the same) as the composition of the underlying TiAl alloy base materials of first part 54 and second part 56. Additionally or alternatively, the application of titanium-based powder 44 may help reduce the overall processing time (e.g., time heat is applied to braze material 50 or joint region 46 to induce brazing) by allowing the composition of braze material 50 to more readily homogenize with at least one of first part 54 or second part 56 compared to examples that to not include titanium-based powder 44.

In some examples, titanium-based powder 44 may include titanium hydride. In some such examples, the titanium hydride may also protect the titanium of the titanium powder 44 during the brazing process by reducing or substantially preventing unwanted reactions (e.g., preventing or nearly preventing) of the titanium powder 44, such as the titanium undergoing oxidation. Additionally, as the temperature of joint region 46 increases to induce brazing between first part 54 and second part 56, the titanium hydride may decompose, releasing hydrogen into enclosure 42 and leaving behind elemental titanium, which will infuse into braze material 50 during the brazing process.

Titanium-based powder 44 may be applied to braze material 50 using any suitable technique. For example, titanium-based powder 44 may be applied using a slurry deposition process where titanium-based particles (e.g., titanium hydride) are mixed with one or more solvents to form a paste. The paste may then be applied to braze material 50 and subsequently dried. In some examples, titanium-based powder 44 may include one or more additive components including, for example, at least one of niobium, molybdenum, chrome, boron, tantalum, carbon, or the like. In some examples, titanium-based powder 44 may include niobium and molybdenum.

As describe above, computing device 64 may control one or more of operations of assembly 40 including at least one heat source 48. In some examples, heat source 48 used to heat braze material 50 or joint region 46 may include a conduction, radiation, or convection heat source. In some examples, braze material 50 and joint rejoin 56 may be heated at a rate of between about 1°C/min. and about 20 °C/min. to a target temperature well above the melting point of braze material 50 (e.g., about 1400 °C). The temperature may then be held at the target temperature for about 60 min. to allow braze material 50 and titanium-based powder 44 to at least partially infuse first part 54 and second part 56. In some examples, assembly 40 may include a different heat source, e.g., heat source 28 of FIG. 1, to braze first and second parts 54 and 56.

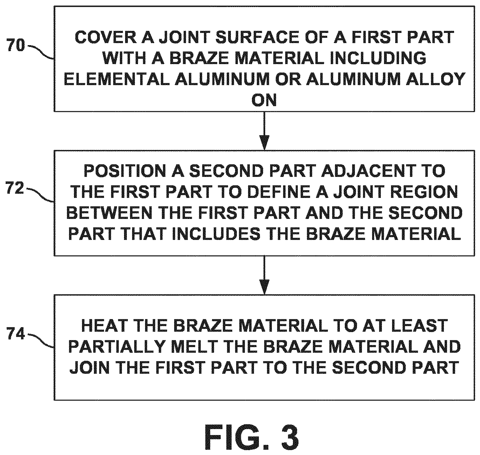

In accordance with examples of this disclosure, assemblies 10 and 50 may be used to join first part 14, 64 and secondpart 16, 66 using braze material 30, 60. FIG. 3 is a flow diagram illustrating an example technique for joining first part 14, 64 and second part 16, 66 using a braze material 30, 60. Although the technique of FIG. 3 will be described with concurrent reference to assembly 40 of FIG. 2, in other examples, the technique of FIG. 3 may be performed by another assembly, such as assembly 10 of FIG. 1.

The technique of FIG. 3 may include positioning braze material 50 including elemental aluminum or an aluminum-based alloy on a joint surface 58 of a first part 54 (70) followed by positioning secondpart 56 adjacent and in contact to first part 54 to define joint region 46 between first part 54 and second part 56 that includes the braze material 50 (72). As described above, in some examples braze material 50 may be coated on joint surface 58 using at least one of a hot dip process (e.g., dipping first part 54 in molten aluminum) or an electroplating process. Electroplating of braze material 50 (e.g., elemental aluminum) on joint surface 58 may allow for the selective application of braze material 50 to first part 54 to create a substantially uniform (e.g., uniform or nearly uniform) layer of braze material 50 on joint surface 58. The uniform layer of braze material 50 on first part 54 may in turn establish a more uniform braze joint (e.g., a braze joint having a homogenous or nearly homogenous composition) between first part 54 and second part 56. In some examples, braze material 50 may optionally be applied to a joint surface 60 of second part 56 using the electroplating or hot dip process.

Additionally or alternatively, in some examples braze material 50 may be may be in the form of a thin sheet or foil (e.g., aluminum foil less than about 200 microns) and positioned on joint surface 58 so that braze material 50 becomes sandwiched between first and second parts 54 and 56.

In some examples, first part 54 may include a base material that includes TiAl alloy and braze material 50 may include at least about 99% by weight aluminum. For example, first part 54 may include titanium alloys such as Ti64, Ti6242, Ti6246, or the like. Braze material 50 may cover joint surface 58 of first part 54 (e.g., coated on joint surface 58 or positioned adjacent to joint surface 58) such that it defines a thickness perpendicular to joint surface 58 of about 20 microns to about 200 microns. In some examples the thickness of braze material 50 may be about 20 microns to about 100 microns.

The technique of FIG. 3 further includes heating, for example, using one or more heat sources 58, joint region 46 to at least partially melt braze material 50 causing the braze material to flow and join first part 54 (e.g., joint surface 58) to second part 56 (e.g., joint surface 60) (74). The resulting brazing process may cause braze material 50 to at least partially infuse first part 54 and second part 56. During the infusion process, in some examples, at least some of the TiAl alloy base materials (e.g., titanium) of first part 54 may inter-infuse into braze material 50. In some examples, the infusion process may form a braze joint that includes a composition substantially the same (e.g., the same or nearly the same) as the composition of the underlying base material of first part 54. In some examples, the composition of braze joint may consist of a TiAl alloy.

In some examples, the technique of FIG. 3 may optionally include depositing titanium-based powder 44, such as titanium hydride, on braze material 50 prior to heating joint region 46 to induce brazing (74). As described above, titanium-based powder 44 may be deposited on braze material 50 using any suitable technique including, for example, slurry deposition. In some examples, titanium-based powder 44 may be applied to help tailor the final composition of the braze joint so that resultant braze joint includes a composition substantially the same (e.g., the same or nearly the same) as the composition of the underlying base material of first part 54 (e.g., a composition substantially the same as the TiAl alloy base material of first part 54). In some examples, depositing titanium-based powder 44 on braze material 50 may reduce processing time (e.g., time heat is applied to joint region 46) by allowing the composition of braze material 50 to quickly homogenize with at least first part 54.

In some examples, titanium-based powder 44 may include other additives including, for example, niobium and molybdenum in an amount of about 7 at.% niobium and about 2 at.% molybdenum. In some examples, the amount of titanium-based powder 44 and braze material 50 applied may be selected so that the combined composition of the titanium-based powder 44 and braze material 50 is substantially the same (e.g., the same or nearly the same) as the composition of the underlying base material of first part 54. In some examples, about 50 at.% titanium-based powder 44 may be applied per about 50 at.% ofbraze material 50.

In some examples, as braze material 50 is heated (74), force may be exerted on first and secondparts 54 and 56 to urge first joint surface 58 toward second joint surface 60, which may assist in joining first and secondparts 54 and 56.

Additionally and optionally, during the technique of FIG. 3, computing device 64 may control one or more of operations of assembly 40 including at least one heat source 48, for example, to preheat at least one of first part 54 or second part 56, heat braze material 50 above its melting point, control the cooling rate of at least one of first part 54, second part 56, or joint region 46 after brazing has been completed, or combinations thereof. For example, computing device 64 may control the temperature ramp rates during preheating, brazing, postheating, or a combinations thereof to avoid thermal shock to first part 54 and second part 56 and to ensure uniformity of the resulting braze joint between the parts 54 and 56.

Further aspects and/or embodiments may be understood with reference to the following numbered paragraphs:
1. A method comprising:
   covering a joint surface of a first part comprising a titanium aluminum (TiAl) alloy with a braze material comprising aluminum, wherein covering the joint surface comprises at least one of electroplating the braze material on the joint surface, hot dipping the braze material on the joint surface, or positioning a foil of the braze material adjacent to the joint surface;
   positioning a second part comprising a titanium alloy in contact with the first part to define a joint region, wherein the joint region comprises the braze material interposed between the second part and the joint surface of the first part; and
   heating the joint region to at least partially melt the braze material to form a braze joint connecting the first part to the second part.
2. The method of paragraph 1, wherein the second part comprises a TiAl alloy.
3. The method of paragraph 1 or 2, wherein coating the braze material comprises electroplating the braze material on the joint surface of the first part.
4. The method of any one of paragraphs 1 to 3, wherein the braze material comprises at least about 99% by weight elemental aluminum.
5. The method of any one ofparagraphs 1 to 4, further comprising depositing a titanium-based powder on the braze material after coating the braze material on the joint surface of the first part, wherein the joint region comprises the titanium-based powder interposed between the braze material and the second part.
6. The method of paragraph 5, wherein the titanium-based powder comprises titanium hydride.
7. The method of any one ofparagraphs 1 to 6, wherein the braze joint comprises a TiAl alloy.
8. The method of paragraph 7, wherein the braze joint comprises about 40 atomic percent (at.%) to about 60 at.% titanium and about 39 at.% to about 60 at.% aluminum.
9. The method of any one of paragraphs 1 to 8, wherein the first part comprises about 46 at.% to about 56 at.% titanium and about 39 at.% to about 49 at.% aluminum.
10. The method of any one ofparagraphs 1 to 9, wherein heating the joint region comprises:
   heating the joint region in a vacuum furnace to melt the braze material, or
   locally heating the braze material using at least one of a laser or a plasma arc torch to at least partially melt the braze material.
11. The method of any one of paragraphs 1 to 10, further comprising masking a portion of the first part to define the joint surface prior to coating the braze material on the joint surface.
12. An assembly comprising:
   a first part comprising a TiAl alloy and a layer of a braze material on a joint surface of the first part, wherein the braze material comprises at least 99% by weight aluminum;
   a second part comprising a TiAl alloy, wherein the first part and second part contact one another to define a joint region, wherein the joint region comprises the layer of the braze material interposed between the second part and the joint surface of the first part; and
   a heat source configured to heat at least the braze material in the joint region to at least partially melt the layer of braze material.
13. The assembly of paragraph 12, wherein the first part and the second part comprise about 46 at.% to about 56 at.% titanium and about 39 at.% to about 49 at.% aluminum.
14. The assembly of paragraph 12 or 13, further comprising a titanium-based powder deposited on the layer of the braze material, wherein the joint region comprises the titanium-based powder interposed between the braze material and the second part.
15. The assembly of paragraph 14, wherein the titanium-based powder comprises titanium hydride.
16. The assembly of paragraph 14 or 15, wherein the titanium-based powder comprises at least one of niobium or molybdenum based powder.
17. The assembly of any one of paragraphs 12 to 16, wherein the layer of the braze material comprises a solid layer of the braze material that defines a thickness of about 20 to about 200 microns.
18. The assembly of any one of paragraphs 12 to 17, wherein the second part comprises a second layer of braze material comprising at least about 99% by weight aluminum on a second joint surface of the second part.
19. A method comprising:
   electroplating a braze material comprising aluminum on a joint surface of a first part comprising a titanium aluminum (TiAl) alloy;
   positioning a second part in contact with the first part to define a joint region, wherein the joint region comprises the braze material interposed between the second part and the joint surface of the first part; and
   heating the joint region to at least partially melt the braze material and to form a braze joint that joins the first part to the second part.
20. The method of paragraph 19, further comprising:
   depositing a titanium-based powder on the braze material prior to heating the joint region; wherein joint region comprises the titanium-based powder interposed between the braze material and the second part.

Various examples have been described. These and other examples are within the scope of the following claims.

## Claims

1. A method comprising:
covering a joint surface of a first part comprising a titanium aluminum (TiAl) alloy with a braze material comprising aluminum, wherein covering the joint surface comprises at least one of electroplating the braze material on the joint surface, hot dipping the braze material on the joint surface, or positioning a foil of the braze material adjacent to the joint surface;
positioning a second part comprising a titanium alloy in contact with the first part to define a joint region, wherein the joint region comprises the braze material interposed between the second part and the joint surface of the first part; and
heating the joint region to at least partially melt the braze material to form a braze joint connecting the first part to the second part.

2. The method of claim 1, wherein coating the braze material comprises electroplating the braze material on the joint surface of the first part.

3. The method of claim 1 or 2, wherein the braze material comprises at least about 99% by weight elemental aluminum.

4. The method of any one of claims 1 to 3, further comprising depositing a titanium-based powder on the braze material after coating the braze material on the joint surface of the first part, wherein the joint region comprises the titanium-based powder interposed between the braze material and the second part.

5. The method of claim 4, wherein the titanium-based powder comprises titanium hydride.

6. The method of claim 4 or 5, wherein the titanium-based powder comprises at least one of niobium or molybdenum based powder.

7. The method of any one of claims 1 to 6, wherein the braze joint comprises about 40 atomic percent (at.%) to about 60 at.% titanium and about 39 at.% to about 60 at.% aluminum.

8. The method of any one of claims 1 to 7, wherein the first part comprises about 46 at.% to about 56 at.% titanium and about 39 at.% to about 49 at.% aluminum.

9. The method of any one of claims 1 to 8, wherein heating the joint region comprises:
heating the joint region in a vacuum furnace to melt the braze material, or
locally heating the braze material using at least one of a laser or a plasma arc torch to at least partially melt the braze material.

10. The method of any one of claims 1 to 9, further comprising masking a portion of the first part to define the joint surface prior to coating the braze material on the joint surface.

11. The method of any one of claims 1 to 10, wherein covering the joint surface of the first part comprising the TiAl alloy with the braze material comprises forming a layer of the braze material that defines a thickness of about 20 to about 200 microns.

12. The method of any one of claims 1 to 11, wherein the second part comprises a TiAl alloy.

13. The method of any one of claims 1 to 12, wherein the braze joint comprises TiAl alloy.

14. An assembly comprising:
a first part comprising a TiAl alloy and a layer of a braze material on a joint surface of the first part, wherein the braze material comprises at least 99% by weight aluminum;
a second part comprising a TiAl alloy, wherein the first part and second part contact one another to define a joint region, wherein the joint region comprises the layer of the braze material interposed between the second part and the joint surface of the first part; and
a heat source configured to heat at least the braze material in the joint region to at least partially melt the layer of braze material.

15. The assembly of claim 14, further comprising a titanium-based powder deposited on the layer of the braze material, wherein the joint region comprises the titanium-based powder interposed between the braze material and the second part.
